# EUROPÄISCHE PATENTANMELDUNG

(11) **EP 4 644 177 A1**
(43) Veröffentlichungstag der Anmeldung: **05.11.2025**
(21) Anmeldenummer: 25174083.3
(22) Anmeldetag: 02.05.2025
(51) Int. Cl.: B60P 3/14, B60R 21/00, B60R 21/34, F16P 1/02

(54) **NUTZFAHRZEUG MIT ABSPERRELEMENTEN**

(30) Priorität: 02.05.2024 DE 102024112381
(71) Anmelder: CubicCube GmbH, 76287 Rheinstetten (DE)
(72) Erfinder: Rittmann, Frank, 76189 Karlsruhe (DE); Zawisla, Andreas Roman, 76137 Karlsruhe (DE)
(74) Vertreter: Mertzlufft-Paufler, Cornelius

(57) **Zusammenfassung**

Die Erfindung schlägt vor, dass bei einem Nutzfahrzeug (1) ein Aufbau (3) verwendet wird. Dabei ist an einem heckseitigen Ende (4) des Aufbaus (3) ein Absperrelement (5) angebracht. Das Absperrelement (5) dient dem Absperren eines Arbeitsbereichs (6) (vgl. Fig. 1).

## Beschreibung

Die Erfindung betrifft ein Nutzfahrzeug mit einem einen Laderaum umschließenden Aufbau. Solche Nutzfahrzeuge sind in der Praxis bekannt.

Es ist die Aufgabe der Erfindung, die Sicherheit von Arbeitsbereichen in unmittelbarer Nähe des Nutzfahrzeugs zu verbessern.

Zur Lösung dieser Aufgabe schlägt die Erfindung die Merkmale von Anspruch 1 vor. Insbesondere wird somit erfindungsgemäß bei einem Nutzfahrzeug der eingangs beschriebenen Art vorgeschlagen, dass an einem heckseitigen Ende des Aufbaus ein Absperrelement zum Absperren eines Arbeitsbereichs gegenüber Personen angebracht ist und wobei das Absperrelement aus einer am Aufbau anliegenden Position in eine Absperrposition bringbar ist. Bevorzugt ist das Absperrelement an einer Seitenwand des Aufbaus angebracht.

Das Nutzfahrzeug kann beispielsweise im Bereich der Rohrreinigung und -inspektion verwendet werden. Durch die Absperrelemente kann beispielsweise der Bereich um eine Rohröffnung abgesperrt werden, an den das Nutzfahrzeug herangefahren ist, sodass verhindert werden kann, dass Menschen den Arbeitsbereich versehentlich oder unbefugt betreten.

Der Aufbau kann dabei als Karosserie ausgebildet sein. Das Absperrelement kann hierbei bei einem modularen Aufbau in einem Heckmodul ausgebildet sein.

Eine anliegende Position kann hierbei bedeuten, dass das Absperrelement an einer Fläche des Aufbaus anliegt oder zu dieser in einem geringen Abstand steht und zu dieser parallel ist.

Eine Absperrposition kann eine Position sein, in der die Absperrelemente den Arbeitsbereich für Menschen absperren.

Bei dem Absperrelement kann es sich beispielsweise um eine Stange oder um eine Platte oder auch um ein anderes Bauteil handeln. Es kann sich bei dem Absperrelement um einen Absperrarm handeln.

Bei einer vorteilhaften Ausgestaltung kann vorgesehen sein, dass das Absperrelement über ein Führungselement an dem heckseitigen Ende des Aufbaus angebracht ist.

Das Führungselement kann ein Gelenk, ein Lager, eine Schiene oder ein ähnliches Bauteil sein. Damit kann das Absperrelement in die Absperrposition ausklappbar oder ausdrehbar oder ausziehbar oder ausfahrbar sein. Das Absperrelement kann auch über mehrere Rotationsachsen ausdrehbar sein.

Bei einer weiteren vorteilhaften Ausgestaltung kann vorgesehen sein, dass an dem heckseitigen Ende des Aufbaus ein Halteelement angebracht ist. Das Halteelement kann dazu dienen, das Absperrelement in der am Aufbau anliegenden Position zu halten. Das Halteelement kann beispielsweise eine Haltetasche ausbilden. Das Halteelement kann für das Absperrelement als Führung in die anliegende Position dienen und es kann einer Fixierung des Absperrelements der anliegenden Position dienen. Außerdem kann das Halteelement Arretiermittel aufweisen, welche das Absperrelement in seiner am Aufbau anliegenden Position hält und welches ein Herausklappen des Absperrelements verhindert.

Bevorzugt ist das Absperrelement in seiner am Aufbau anliegenden Position in dieser Position arretierbar. Eine Arretierung kann hierbei an dem Aufbau erfolgen. Der Aufbau kann hierzu ein geeignetes Arretiermittel aufweisen, wobei das Absperrelement ein hierzu passende Gegenarretiermittel aufweisen kann. Beispielsweise weist das Halteelement ein Arretiermittel auf.

Das Arretiermittel kann zum Beispiel ein Riegel sein, der ein ungewolltes Herausfallen des Absperrelements aus dem Halteelement verhindern kann. Als Gegenarretiermittel kommt dann beispielsweise ein Riegelverschluss in Betracht.

Bei einer weiteren vorteilhaften Ausgestaltung kann vorgesehen sein, dass das Nutzfahrzeug einen Antrieb aufweist, durch den das Absperrelement aus der am Aufbau anliegenden Position in die Absperrposition bringbar ist. Der Antrieb kann die Bedienung erleichtern. Der Antrieb kann beispielsweise ein Elektroantrieb oder ein hydraulischer Antrieb sein.

Bei einer weiteren vorteilhaften Ausgestaltung kann vorgesehen sein, dass an dem Absperrelement ein Verlängerungselement angebracht ist, wobei das Verlängerungselement aus einer am Absperrelement anliegenden Position in eine Absperrposition bringbar ist. Durch das Verlängerungselement kann der abgesperrte Bereich vergrößert werden.

Bevorzugt ist das Verlängerungselement über ein Führungselement an dem Absperrelement angebracht. Das Führungselement kann wie das oben beschriebene Führungselement ausgeführt sein.

Bei einer weiteren vorteilhaften Ausgestaltung kann vorgesehen sein, dass ein Verlängerungselement, beispielsweise das zuvor erwähnte Verlängerungselement, mittels eines Antriebs, beispielsweise des zuvor beschriebenen Antriebs, aus einer am Absperrelement anliegenden Position in eine Absperrposition bringbar ist. Dies kann besonders komfortabel sein.

Bei einer weiteren vorteilhaften Ausgestaltung kann vorgesehen sein, dass an dem Absperrelement ein Standbein angebracht ist. Bevorzugt ist das Standbein aus einer am Absperrelement anliegenden Position in eine Absperrposition bringbar. Das Standbein kann dazu dienen, die Stabilität des Absperrelements zu erhöhen, indem das Standbein auf dem Boden aufgesetzt wird.

Bevorzugt ist das Standbein über ein Führungselement an dem Absperrelement angebracht. Das Führungselement kann wie das oben beschriebene Führungselement ausgeführt sein.

Bei einer weiteren vorteilhaften Ausgestaltung kann vorgesehen sein, dass das Standbein mittels eines Antriebs, beispielsweise des zuvor beschriebenen Antriebs, aus einer am Absperrelement anliegenden Position in eine Absperrposition bringbar ist. Dies kann den Komfort bei der Bedienung erhöhen.

Die am Aufbau anliegende Position ist bevorzugt eine an einer rechten oder linken Seite des Aufbaus anliegende Position. Hierbei ist das Absperrelement bevorzugt vertikal angeordnet.

Bevorzugt ist das Absperrelement außerhalb eines Heckverschlusses des Aufbaus, beispielsweise einer Heckklappe oder eines Heckrollos, an dem Aufbau angebracht.

In der Absperrposition erstreckt sich das Absperrelement bevorzugt horizontal und/oder entlang einer Fahrrichtung des Nutzfahrzeugs.

Bevorzugt wird das Absperrelement aus einer vertikalen Position in eine horizontale Position geklappt, wobei letztere die Absperrposition ist.

Bei einer weiteren vorteilhaften Ausgestaltung kann vorgesehen sein, dass an dem heckseitigen Ende des Aufbaus ein weiteres Absperrelement angebracht ist. Durch zwei Absperrelemente kann der Arbeitsbereich von zwei Seiten abgesperrt werden. Bevorzugt ist das weitere Absperrelement wie oben beschrieben ausgeführt.

Bei einer weiteren vorteilhaften Ausgestaltung kann vorgesehen sein, dass das Nutzfahrzeug einen Querträger hat und dass in der Absperrposition der Absperrelemente der Querträger an den beiden Absperrelementen anbringbar ist.

Der Querträger kann ein separates Bauteil oder in ein Absperrelement integriert, beispielsweise über ein Führungselement an einem Absperrmittel angebracht sein. Als separates Bauteil kann der Querträger in oder an dem Nutzfahrzeug angeordnet oder gelagert sein.

Die Absperrelemente nehmen auf den Querträger nach unten wirkende Kräfte auf.

An dem Querträger kann ein Seil befestigt werden, über das sich ein Benutzer des Nutzfahrzeugs in die zu inspizierende Rohrleitung und/oder den zu inspizierenden Kanal hinunterlassen kann. Auch kann der Benutzer über das Seil Werkzeuge und anderes Material in das Rohr und/oder den Kanal hinunterlassen und wieder hochziehen.

Bei einer weiteren vorteilhaften Ausgestaltung kann vorgesehen sein, dass an dem Querträger ein Befestigungselement angebracht ist. Das Befestigungselement kann zur Befestigung des Seils an dem Querträger dienen. Beispielsweise kann das Befestigungselement ringförmig und/oder ein Haken sein. Bevorzugt ist das Befestigungselement an dem Querträger mittig angebracht. Mittig bedeutet hierbei in der Mitte einer Längsrichtung des Querträgers.

Bei einer weiteren vorteilhaften Ausgestaltung kann vorgesehen sein, dass der Querträger an einem der Absperrelemente über ein Führungselement angebracht ist. Das Führungselement kann wie das oben beschriebene Führungselement ausgeführt sein. So kann der Querträger, vorzugsweise über einen Antrieb, leicht in die gewünschte Position gebracht werden.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1:: einen erfindungsgemäßen Aufbau,
- Fig. 2:: den Aufbau aus Fig. 1 aus einer Ansicht von unten.
- Fig. 3:: den Aufbau aus Fig. 1 und 2 aus einer Ansicht von unten, jedoch mit Absperrelementen, die sich in einer am Aufbau anliegenden Position befinden.

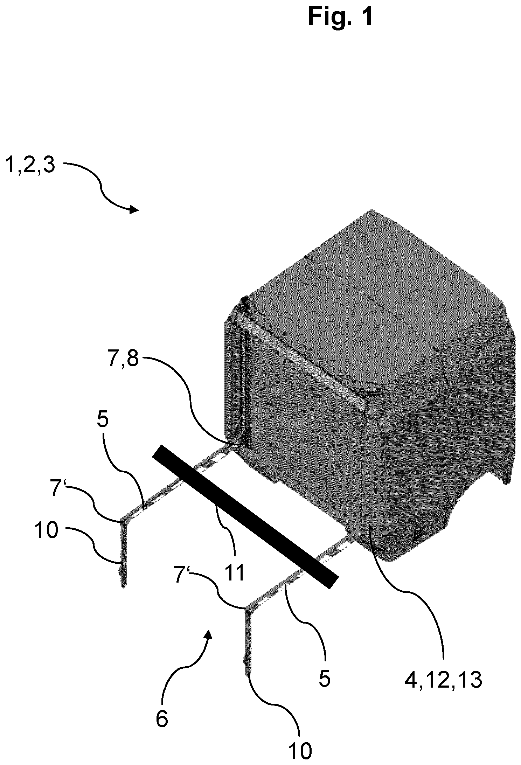

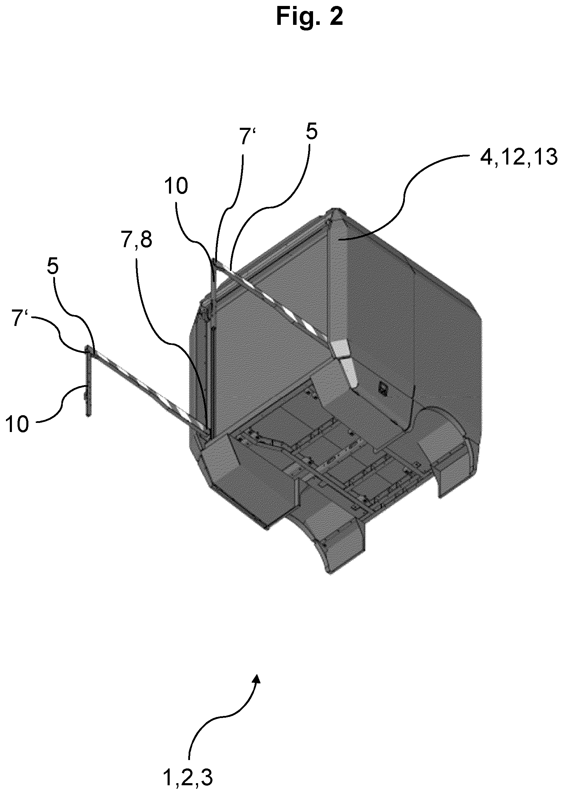

In den Fig. 1 und 2 ist ein Ausschnitt eines erfindungsgemäßen Nutzfahrzeugs 1 zu sehen. Ein Aufbau 3 umschließt hier einen Laderaum 2. An einem heckseitigen Ende 4 des Aufbaus 3 sind dabei zwei Absperrelemente 5 angebracht.

Das Nutzfahrzeug 1 weist einen modularen Aufbau 3 auf, welcher ein Heckmodul 12 aufweist. Die Absperrelemente 5 sind in dem hier gezeigten Ausführungsbeispiel an jeweils einer Seitenwand 13 des Heckmoduls 12 ausgebildet.

Die Absperrelemente 5 sind in ihrer Absperrposition gezeigt und sperren einen Arbeitsbereich 6 ab, um zu vermeiden, dass Menschen den Arbeitsbereich 6 betreten und sich so in Gefahr bringen.

In dem Arbeitsbereich 6 kann sich beispielsweise eine nicht gezeigte Öffnung zu einer Rohrleitung, die zu inspizieren ist, befinden.

Die Absperrelemente 5 sind jeweils über ein Führungselement 7 an dem Aufbau 3 angebracht. Die Führungselemente 7 sind hierbei Gelenke, welche es erlauben, dass die Absperrelemente 5 in eine am Aufbau 3 anliegende Position hochgeklappt werden können.

An den beiden Führungselementen 7 ist jeweils ein Antrieb 8 angeordnet, mit dem die Absperrelemente 5 ein- und ausgeklappt werden können.

Weiter ist zu sehen, dass an den Absperrelementen 5 jeweils ein Standbein 10 angebracht ist. Diese erhöhen die Stabilität der Absperrung.

Die Standbeine 10 sind über Führungselemente 7' an den Absperrelementen 5 angebracht. Die Führungselemente 7' sind ebenfalls Gelenke, welche erlauben, dass die Standbeine 10 in eine an den Absperrelementen 5 anliegende Position hochgeklappt werden können.

Auf den Standbeinen 5 ist zudem ein Querträger 11 angebracht. Dieser stellt in diesem Ausführungsbeispiel ein separates Bauteil dar. An dem Querträger 11 kann ein Seil befestigt werden, mit dem sich ein Benutzer des Nutzfahrzeugs in die Öffnung der Rohrleitung hineinlassen kann.

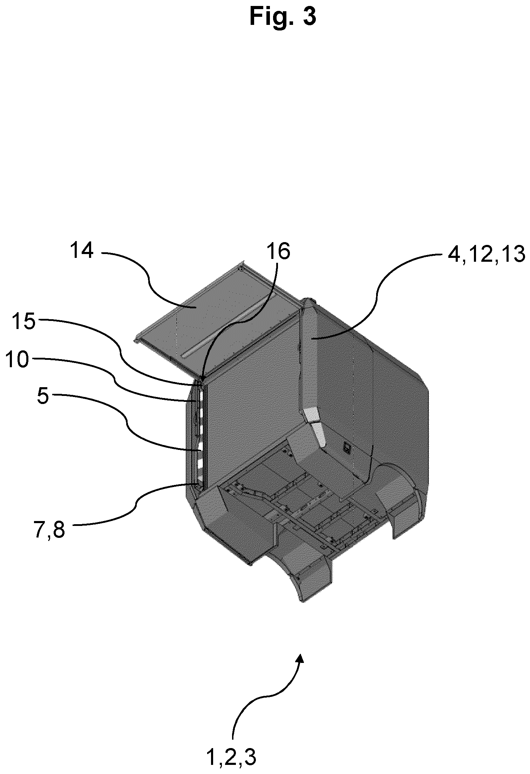

In Fig. 3 ist derselbe Ausschnitt eines Nutzfahrzeugs 1 mit einem einen Laderaum 2 umschließenden Aufbau 3 zu sehen. Die Absperrelemente 5 befinden sich hier jedoch in einer am Aufbau 3 anliegenden Position. Die Absperrelemente 5 sind also hochgeklappt. Die Absperrelemente 5 werden dabei von einem Halteelement 15 gehalten, welches als Haltetasche ausgebildet ist und für das das Absperrelement 5 als Führung in die anliegende Position und zur Fixierung dient. Außerdem kann das Halteelement Arretiermittel aufweisen, welche das Absperrelement 5 in seiner am Aufbau anliegenden Position hält und welches ein Herausklappen des Absperrelements, beispielsweise während einer Fahrt des Nutzfahrzeugs 1, verhindert. Das Arretiermittel kann beispielsweise einen Bolzen oder einen Riegel aufweisen.

Auch die Standbeine 10 sind eingeklappt und liegen an dem jeweiligen Absperrelement 5 an.

Zudem ist eine Überdachung 14 des Aufbaus zu sehen, welche sich in einem herausgezogenen Zustand befindet. Die Überdachung 14 ist in den Fig. 1 und 2 nicht zu sehen, da diese sich dort in einem eingezogenen Zustand befindet.

Die Erfindung schlägt vor, dass bei einem Nutzfahrzeug 1 ein Aufbau 3 verwendet wird. Dabei ist an einem heckseitigen Ende 4 des Aufbaus 3 ein Absperrelement 5 angebracht. Das Absperrelement 5 dient dem Absperren eines Arbeitsbereichs 6.

### Bezugszeichenliste

- 1: Nutzfahrzeug
- 2: Laderaum
- 3: Aufbau
- 4: Heckseitiges Ende (von 3)
- 5: Absperrelement
- 6: Arbeitsbereich
- 7: Führungselement
- 8: Antrieb
- 10: Standbein
- 11: Querträger
- 12: Heckmodul
- 13: Seitenwand
- 14: Überdachung
- 15: Halteelement
- 16: Arretiermittel

## Patentansprüche

1. Nutzfahrzeug (1) mit einem einen Laderaum (2) umschließenden Aufbau (3), wobei an einem heckseitigen Ende (4) des Aufbaus (3) ein Absperrelement (5) zum Absperren eines Arbeitsbereichs (6) gegenüber Personen angebracht ist und wobei das Absperrelement (5) aus einer am Aufbau (3) anliegenden Position in eine Absperrposition bringbar ist.

2. Nutzfahrzeug (1) nach dem vorangehenden Anspruch, wobei das Absperrelement (5) über ein Führungselement (7) an dem heckseitigen Ende (4) des Aufbaus (3) angebracht ist.

3. Nutzfahrzeug (1) nach einem der vorangehenden Ansprüche, wobei das Nutzfahrzeug (1) einen Antrieb (8) aufweist, durch den das Absperrelement (5) aus der am Aufbau (3) anliegenden Position in die Absperrposition bringbar ist.

4. Nutzfahrzeug (1) nach einem der vorangehenden Ansprüche, wobei an dem Absperrelement (5) ein Verlängerungselement angebracht ist, wobei das Verlängerungselement aus einer am Absperrelement (5) anliegenden Position in eine Absperrposition bringbar ist, insbesondere wobei das Verlängerungselement über ein Führungselement (7) an dem Absperrelement (5) angebracht ist.

5. Nutzfahrzeug (1) nach einem der vorangehenden Ansprüche, wobei ein oder das Verlängerungselement mittels eines oder des Antriebs (8) aus einer am Absperrelement (5) anliegenden Position in eine Absperrposition bringbar ist.

6. Nutzfahrzeug (1) nach einem der vorangehenden Ansprüche, wobei an dem Absperrelement (5) ein Standbein (10) angebracht ist, insbesondere wobei das Standbein (10) aus einer am Absperrelement (5) anliegenden Position in eine Absperrposition bringbar ist und/oder wobei das Standbein (5) über ein Führungselement (7) an dem Absperrelement (5) angebracht ist.

7. Nutzfahrzeug (1) nach dem vorangehenden Anspruch, wobei das Standbein (10) mittels eines oder des Antriebs (8) aus einer am Absperrelement (5) anliegenden Position in eine Absperrposition bringbar ist.

8. Nutzfahrzeug (1) nach einem der vorangehenden Ansprüche, wobei an dem heckseitigen Ende (4) des Aufbaus (3) ein weiteres Absperrelement (5) angebracht ist.

9. Nutzfahrzeug (1) nach dem vorangehenden Anspruch, wobei das Nutzfahrzeug (1) einen Querträger (11) hat und wobei in der Absperrposition der Absperrelemente (5) der Querträger (11) an den beiden Absperrelementen (5) anbringbar ist.

10. Nutzfahrzeug (1) nach dem vorangehenden Anspruch, wobei der Querträger (11) an einem der Absperrelemente (5) über ein Führungselement (7) angebracht ist.
